# EUROPEAN PATENT APPLICATION

(11) **EP 2 299 709 A2**
(43) Date of publication of application: **23.03.2011**
(21) Application number: 10165583.5
(22) Date of filing: 10.06.2010
(51) Int. Cl.: H04N 7/173

(54) **Display apparatus and driving method thereof**

(30) Priority: 16.09.2009 KR 20090087286
(71) Applicant: SAMSUNG ELECTRONICS CO., LTD., Suwon-si, Gyeonggi-do (KR)
(72) Inventor: Choi, Sung-wook, Gyeonggi-do (KR); Kim, Yong-deok, Gyeonggi-do (KR); Lee, Hye-Jeong, Seoul (KR)
(74) Representative: Walaski, Jan Filip

(57) **Abstract**

A display apparatus and a driving method thereof, which are able to conveniently and efficiently provide a social networking service and a broadcasting service between users. The display apparatus may display a web page, receive a broadcasting signal, and display an image of the broadcasting signal. By transmitting at least one of the web page and the image to another user, the display apparatus conveniently provides the social networking service and the broadcasting service to the users.

## Description

The present invention relates to a display apparatus and a driving method thereof, and more particularly to a display apparatus capable of providing web pages for community service and broadcasting, and a driving method thereof.

With regard to the fields of digital signal transmission through a network, data multiplexing, audio and video (A/V) signal processing, digital television broadcasting and display, etc., various techniques have been developed. For example, digital broadcasting has been rapidly standardized and will replace conventional analog broadcasting. As compared with analog broadcasting, digital broadcasting enables data compression and provides excellent transmission speed, sound quality, and picture quality. Also, digital broadcasting is able to provide an interactive service, so that diverse information can be transmitted via the television. In the future, the diverse information will be distributed under television environments. For example, as an interactive television service using high-speed Internet, an internet protocol television (IPTV) provides information service, moving-picture contents, broadcasting, etc. to a television receiver through the Internet. Accordingly, IPTV may be described as a kind of digital convergence fusion between the Internet and television.

Meanwhile, a social network service (SNS) using the Internet has become available. The SNS focuses on building online communities of people who interact through personal connections, sharing information, etc. As an example of an SNS, there are Cyworld, Ontown, Facebook, and so on. The SNS was derived from expression of various exchanging systems such as mail or chatting in real time. In an SNS, homepage contents of all users are stored in one central service server, and a user accesses the server to administer his/her own homepage, or accesses the homepages of others to achieve mutual exchange. Thus, if data such as homepage data of all users is stored in a service server, not only are high maintenance costs of server management needed, but the speed of uploading to and downloading a file from the SNS is varied depending on performance of server. Further, if the server is vulnerable to hacking, personal information may be stolen.

Accordingly, an aspect is to provide a display apparatus which can store a web page and provide the web page, as well as broadcasting to a visitor of the display apparatus, so as to provide a convenient and efficient social network service (SNS), and a driving method thereof.

The foregoing and other aspects can be achieved by providing a display apparatus including: a receiver which receives a broadcasting signal; a video processor which processes the broadcasting signal received by the broadcasting receiver to generate a video signal; a storage unit which stores data of a web page; a display unit which displays at least one of the video signal and the web page; a communication unit which communicates with a communication terminal of a different user through a network; and a controller which controls the display unit to display the web page and the video signal, and controls the communication unit to transmit at least one of the video signal and the web page displayed on the display unit to the communication terminal.

The display apparatus may be assigned an Internet protocol (IP) address by an Internet service provider (ISP).

The controller may control the display to display an indication that there is a request to communicate with the display apparatus when the communication terminal attempts to communicate with the display apparatus.

The controller may control the display unit to selectively display the at least one of the video signal and the web page.

The controller may control the display unit to simultaneously display the video signal and the web page.

The controller may control the display unit to change display of the at least one of the video signal and the web page in response to input of a user of the display apparatus.

The storage may store a web program, the data of the web page, and identification (ID) of the different user.

A user of the display apparatus may access the communication terminal of the different user by clicking at least one of an ID and a name of the different user.

The controller may control the display unit to display a conversation box and controls the display to display information in the conversation box in response to at least one of input by the user of the display apparatus and information received from the different user by the communication unit.

Another aspect can be achieved by providing a method driving of a display apparatus, the method including: receiving a broadcasting signal, processing the received broadcasting signal to generate a video signal, and displaying the video signal on a display; displaying a web page on the display; and transmitting at least one of the video signal and the web page displayed on the display of the display apparatus to an external communication terminal.

The display apparatus may be assigned an Internet protocol (IP) address by an Internet service provider (ISP).

The method may further include displaying an indication that there is a request to communicate with the display apparatus when the external communication terminal attempts to communicate with the display apparatus.

The video signal and the web page may be selectively displayed.

The video signal and the web page may be simultaneously displayed.

The method may further include changing display of the at least one of the video signal and the web page in response to input of a user of the display apparatus. The display apparatus may store a web program, the web page, and identification (ID) of a user of the external communication terminal.

A user of the display apparatus may access the external communication terminal by clicking at least one of an ID and a name of a user of the external communication terminal.

The method may further include displaying a conversation box on the display, and displaying information in the conversation box in response to at least one of input by the user of the display apparatus and information received from a user of the external communication terminal.

The above and other aspects will become apparent and more readily appreciated from the following description of the exemplary embodiments, taken in conjunction with the accompanying drawings, in which:
FIG. 1 shows a community system using a display apparatus according to an exemplary embodiment;
FIG. 2 shows a configuration of a display apparatus according to an exemplary embodiment;
FIG. 3A shows an web page displayed on the display apparatus according to an exemplary embodiment;
FIG. 3B shows a web page displayed on the display apparatus according to another exemplary embodiment;
FIG. 3C shows a web page displayed on the display apparatus according to still another exemplary embodiment;
FIG. 4 is a flowchart showing an environment setup of the display apparatus according to an exemplary embodiment;
FIG. 5 is a flowchart of an external medium accessing the display apparatus according to an exemplary embodiment; and
FIG. 6 is a flowchart showing operation of the display apparatus according to an exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

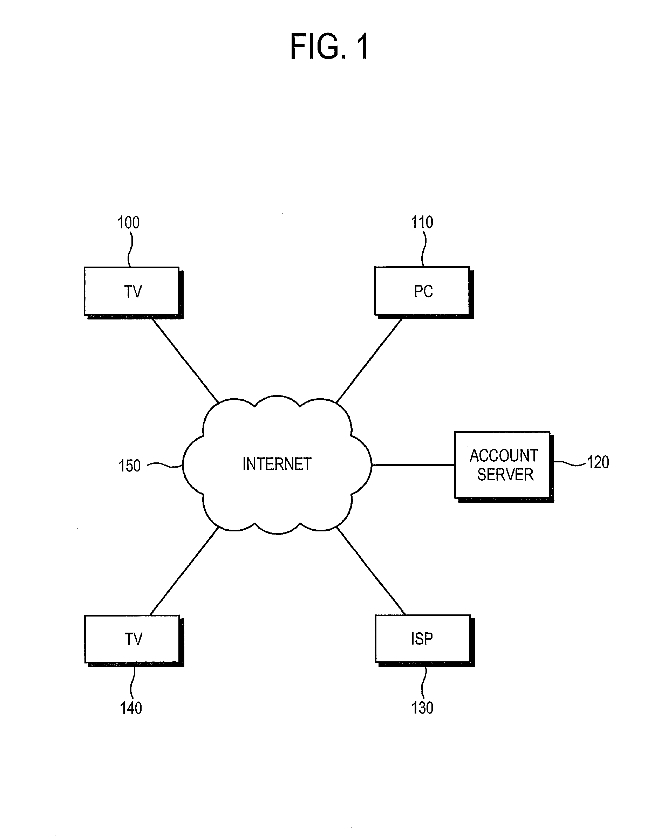

FIG. 1 shows a community system using a display apparatus according to an exemplary embodiment. Here, a television (TV) will be described as an example of the display apparatus. As shown in FIG. 1, a first TV 100, a second TV 140, a personal computer (PC) 110, an account server 120, an Internet service provider (ISP) 130 may be connected through Internet 150. The ISP 130 is a company that provides a user with an Internet connection service, a website building service, a webhosting service, etc. The ISP 130 has equipment needed for Internet connection, and a communication line. Some ISPs 130 may have a high-speed private line to provide a better service to their own customers, while reducing dependency on a telephone network provider. When an identification (ID), a name, or a universal resource locator (URL) is input with respect to a specific TV, the account server 120 performs redirection to the corresponding TV. The account server 120 can store information about a TV user name, a TV user ID, a TV domain name system (DNS), a TV URL, whether the TV accesses the account server 120, etc. Buyers of the first TV 100 and the second TV 140 register serial numbers of the purchased TV, their names, their IDs, etc. to the account server 120. If the second TV 140 or the PC 110 tries to access the first TV 100 through the user ID, the name, or the URL of the first TV 100, the account server 120 connects the second TV 140 or the PC 110 to the first TV 100. The account server 120 may be a dynamic domain name server (DDNS). The user names, the IDs, the URLs, and internet protocols (IP) stored in the account server 120 are matched with the first TV 100 and the second TV 140, respectively.

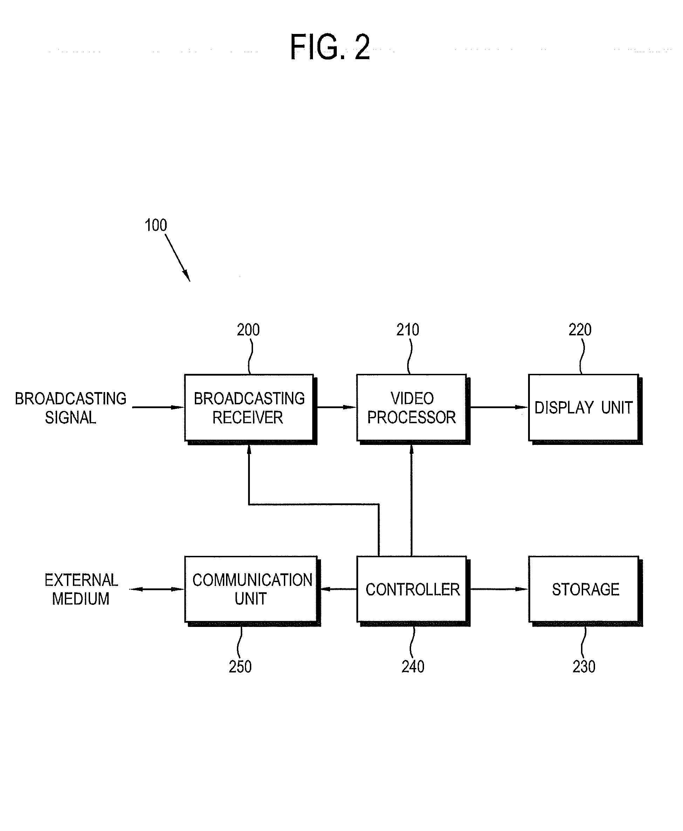

FIG. 2 shows a configuration of a display apparatus according to an exemplary embodiment. The display apparatus 100 in this exemplary embodiment includes a broadcasting receiver 200, a video processor 210, a display unit 220, a communication unit 250, a controller 240 and a storage 230. The broadcasting receiver 200 receives a broadcasting signal. The video processor 210 processes the broadcasting signal received by the broadcasting receiver 200 and a web page supplied from the controller 240 to be displayed. The display unit 220 displays an image and the web page based on the broadcasting signal and the web page processed by the video processor 210, respectively. The communication unit 250 communicates with an external medium, for example through the Internet. The external medium may include an account server, an ISP, a PC, a mobile terminal, etc. The storage 230 stores data such as an avatar showing a character of a user of the PC, the mobile terminal or the like, a photograph, a moving picture, writing, etc. The controller 240 controls the broadcasting receiver 200, the video processor 210, the communication unit 250, and the storage 230. Also, the controller 240 may include a central processing unit (CPU), a random access memory (RAM), a read only memory (ROM), etc. and stores a web server program and a web application.

In this exemplary embodiment, the display apparatus 100 uses an automatically assigned internet protocol (IP) address because the number of IP addresses held by each ISP 130 is limited. Thus, if the display apparatus 100 in this exemplary embodiment is turned on, the ISP 130 assigns an IP address to the display apparatus 100 so that the display apparatus 100 can communicate with other devices, for example through the Internet. If the display apparatus 100 is turned off, the assigned IP address is withdrawn (released or times out) from the display apparatus 100. That is, the ISP 130 assigns the IP address to the display apparatus 100 through the communication unit 250 whenever the display apparatus 100 is turned on, and the controller 240 communicates the assigned IP address to the account server 120. The IP addresses of all display apparatuses registered to the account server 120 are stored in the account server 120, in which the IP addresses of apparatuses are updated when the IP addresses change.

Meanwhile, the display apparatus 100 in this exemplary embodiment may selectively output one of a broadcast and a web page, or may output both at the same time. While a user watches the broadcast, the controller 240 controls the broadcasting receiver 200 to receive a broadcasting signal corresponding to a channel selected by a user. Then, the received broadcasting signal is transmitted to the video processor 210, and the video processor 210 processes the received broadcasting signal to be displayed. The processed broadcasting signal is output through the display unit 220. If an external medium communicates with the display apparatus 100, such as the PC 110, while the broadcast is output, an avatar corresponding to a user of the PC 110 is displayed or alarm is sounded, thereby informing a user of the display apparatus 100 that there is a connection request, information, etc. from the external medium. A user of the display apparatus 100 in this exemplary embodiment may enter into conversation with or share the currently viewing broadcast with the user of the PC 110. If the user of the PC 110 requests an image displayed on the display apparatus 100, the controller 240 receives a video signal from the video processor 210 and supplies the video signal to the PC 110 through the communication unit 250. Alternatively, the controller 240 may receive a broadcasting signal from the broadcasting receiver 200 and supply the broadcasting signal to the PC 110. Also, if it is desired that the web page is output simultaneously while the broadcast is output, the broadcast may be output on a part of a screen and the web page may be output on another part thereof. At this time, if it is desired that the currently displayed image and web page is shared with the external medium, the controller may receive the video signal from the video processor 210 or the broadcasting signal from the broadcasting receiver 200, and at the same time may supply the web page stored therein to the external medium. A communication terminal of the external medium may be a TV, a PC, and a mobile terminal (e.g., a cellular phone, an MP3 player, a personal digital assistant (PDA), etc.), and include a wired or wireless communication module capable of communicating with the display apparatus 100 on the basis of transmission control protocol(TCP)/IP. Further, the communication terminal may include a web program and a video processor to display a broadcast or a web page when receiving the broadcast or the web page from the display apparatus 100.

If a user wants to view a web page, the controller 240 may control the web program, which can display a web page, to display a web page. The controller 240 executes the web program stored in the RAM or ROM, and supplies the web page to the video processor 210. The web page may include a photograph, a moving picture, writing, etc., but is not limited thereto. If there is a connection request or information from the external medium while the web page is output, an avatar corresponding to a user of the external medium is displayed or alarm is sounded. The user of the external medium may view the photograph, the moving picture, the writing, etc. on the web page, and may post up his/her own writing. The broadcast may be output while the web page is displayed in the same manner that the web page is output while an image is displayed. Further, to share an image or a web page with the user of the external medium, the like method may be employed.

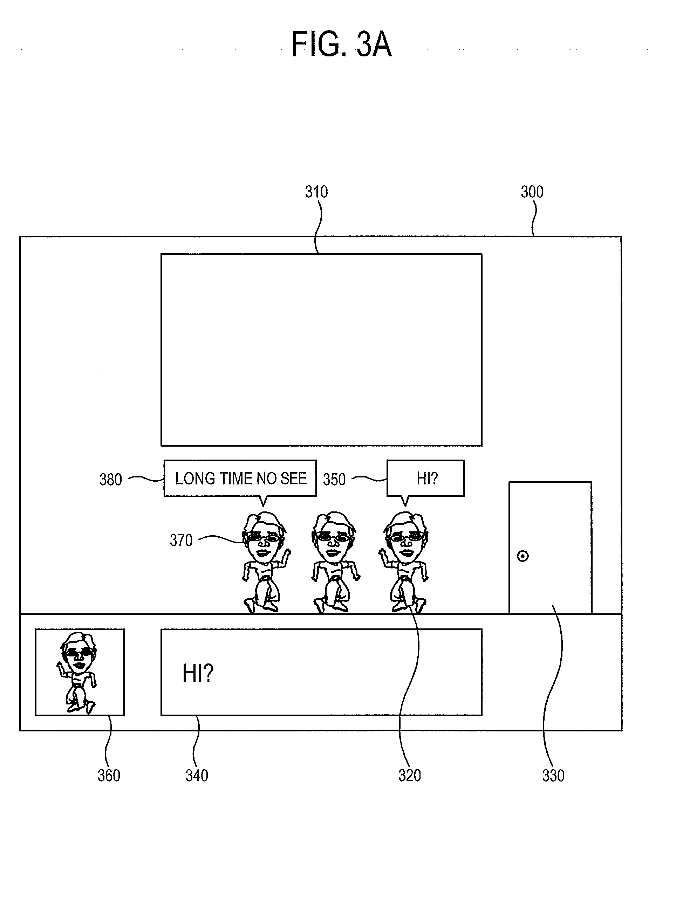

FIG. 3A shows an web page 300 displayed on the display apparatus 100 according to an exemplary embodiment, in which a broadcast 310 is displayed on an upper portion of the web page 300. A box 360 for showing an avatar 320 indicating a user of the display apparatus 100 and a conversation box 340 are displayed on a lower portion of the web page 300. Further, avatars 320 and 370 for a user of the display apparatus 100 and a user of the external medium, and a door 330 are displayed between the upper and lower portions. If there is a connection request or information from the external medium, the avatar 370 corresponding to the visitor appears through the door 330. The avatars 320 and 370 may have various shapes and colors, so that the user of the display apparatus 100 and users of the external medium can be distinguished from one another by the avatars.

In the meantime, a user of the display apparatus 100 may enter into conversation with a user of the external medium and may share the broadcast with him/her. If a user of the display apparatus 100 inputs and sends a message through the conversation box 340, the message 350 is displayed above the avatar 320. Then, if the user of the external medium sends a message, the corresponding message 380 is displayed above the avatar 370. Likewise, conversation contents may be displayed in the case of entering into conversation with another user of a different external medium.

Also, the broadcast 310 may be shared with a user of the external medium as being displayed on a web page. A portion where the broadcast 310 is displayed may be changed by a user's intention, and a size of a screen may be adjustable.

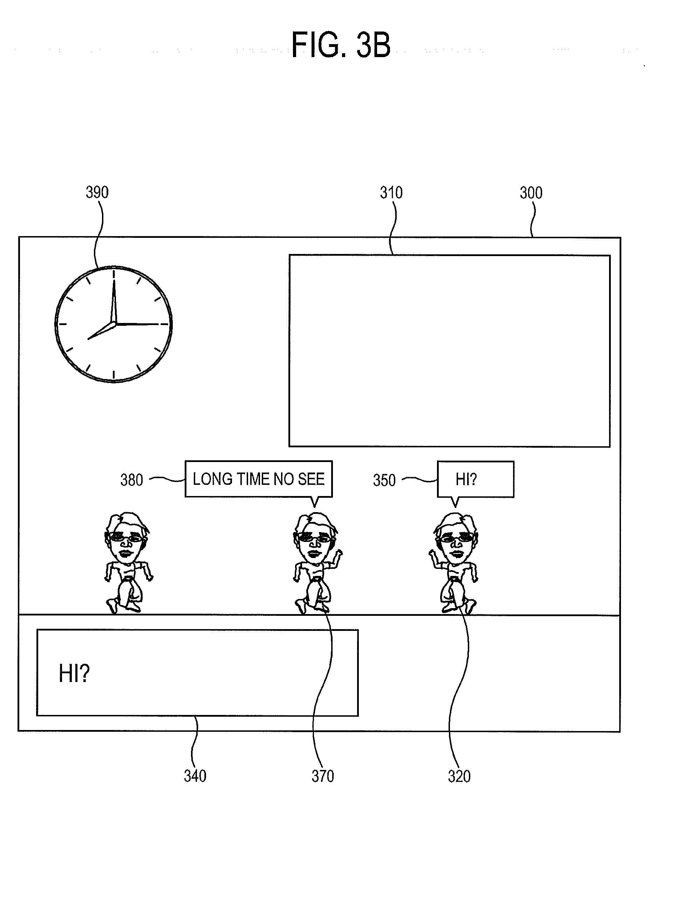

FIG. 3B shows a web page 300 displayed on the display apparatus 100 according to another exemplary embodiment, in which a broadcast 310 and a clock 390 are displayed on an upper portion of the web page 300, and a conversation box 340 is displayed on a lower portion thereof. Also, avatars 320 and 370 indicating a user of the display apparatus 100 and a user of an external medium are displayed between the upper portion and the lower portion. In the conversation, if a user of the display apparatus 100 inputs and sends a message through the conversation box 340, the message 350 is displayed above the avatar 320. Then, if a user of the external medium sends a message, the corresponding message 380 is displayed above the avatar 370.

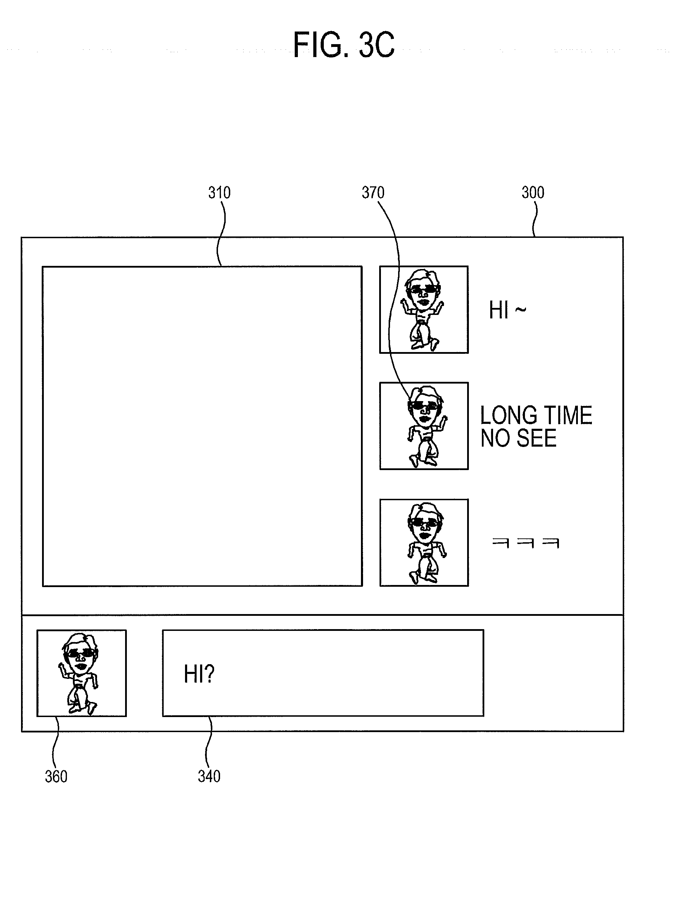

FIG. 3C shows a web page 300 displayed on the display apparatus 100 according to still another exemplary embodiment. In FIG. 3C, a box 360 for showing an avatar indicating a user of the display apparatus 100 and a conversation box 340 are displayed in a lower portion of the web page 300. A broadcast 310 and an avatar 370 indicating a user of an external apparatus are displayed in an upper portion of the web page 300. In the conversation, a user of the display apparatus 100 can input and send a message through the conversation box 340. If a user of the external medium sends a message, the corresponding message is output at a lateral side of the avatar 370.

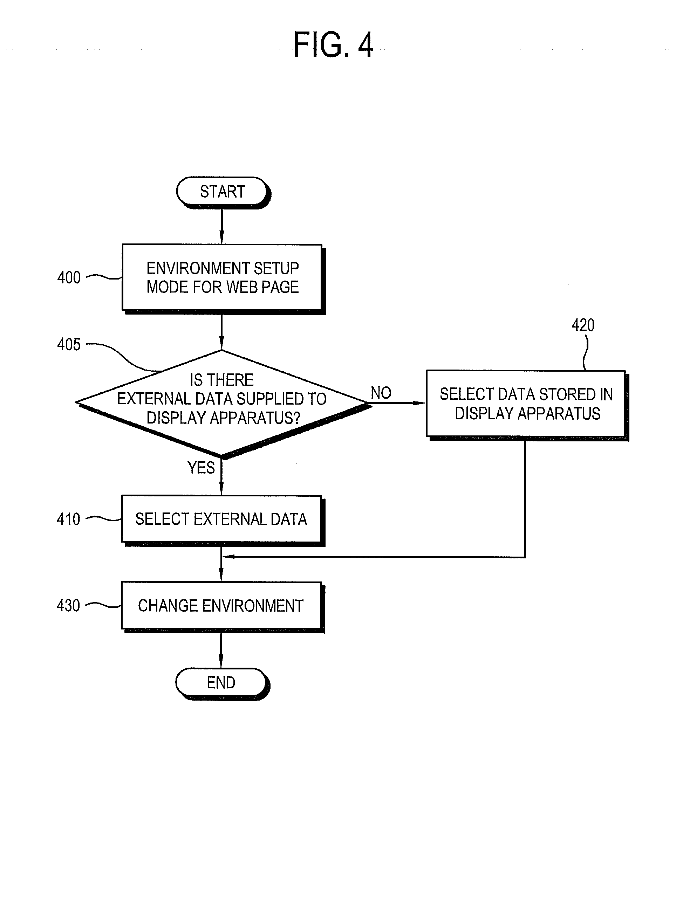

FIG. 4 is a flowchart showing an environment setup of the display apparatus according to an exemplary embodiment. After the web page is output, if a user selects an environment setup mode for changing the color, the shape, the configuration, etc. of the web page at operation 400, the controller 240 implements the environment setup in response to the user's selection. At operation 405, a user may receive external data even though he/she can use data stored in the storage 230. That is, desired data can be downloaded from a universal serial bus (USB) memory or Internet, and then used. In the case of receiving external data, the data is received from the corresponding medium at operation 410 and the environment setup is performed at operation 430. In the case of using the data stored in the display apparatus 100 in this exemplary embodiment at operation 420, the environment setup is performed using the stored data at operation 430.

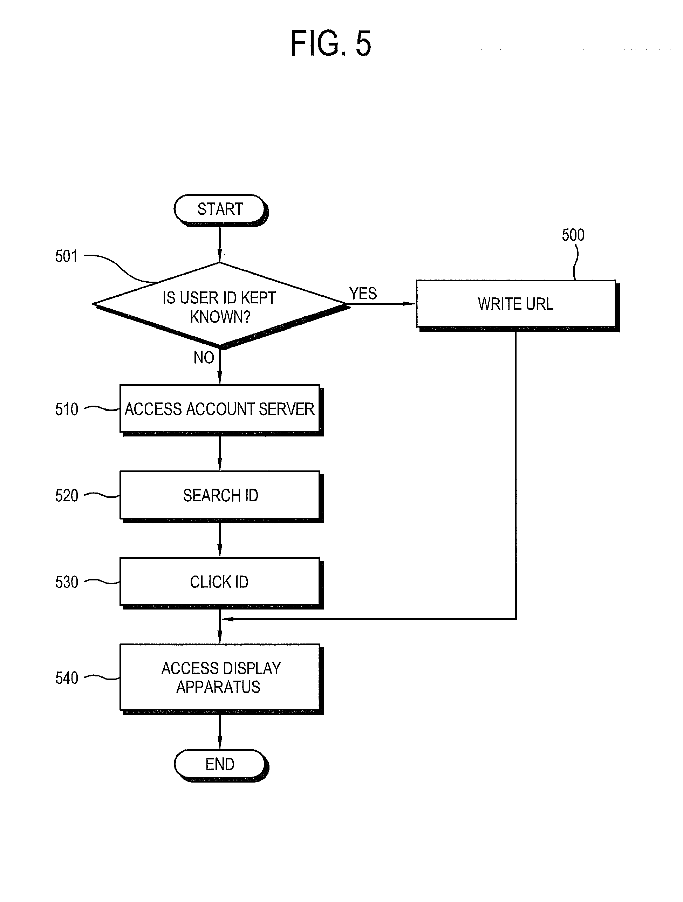

FIG. 5 is a flowchart of an external medium accessing the display apparatus 100 according to an exemplary embodiment. First, like the case a connection between a display apparatus and another display apparatus registered to the account server 120, if the display apparatus 100 in this exemplary embodiment accesses another display apparatus registered to the account server 120, an ID and a name are clicked through the display apparatus 100 since the ID and the name are registered to the account server 120, so that the account server 120 uses a redirection function to access a desired display apparatus. For quick access, a user may separately manage the IDs and the names with respect to favorite display apparatuses. In the case that a user does not know the corresponding ID and name at operation 501 (NO), he/she can search for the ID or the name through the display apparatus 100 at operation 510. The account server 120 searches the ID or the name and performs the access at operation 520. At this time, the names may be duplicated. At this time, users having duplicated names are all displayed, and then the ID of the other party who wants to access is used in the access.

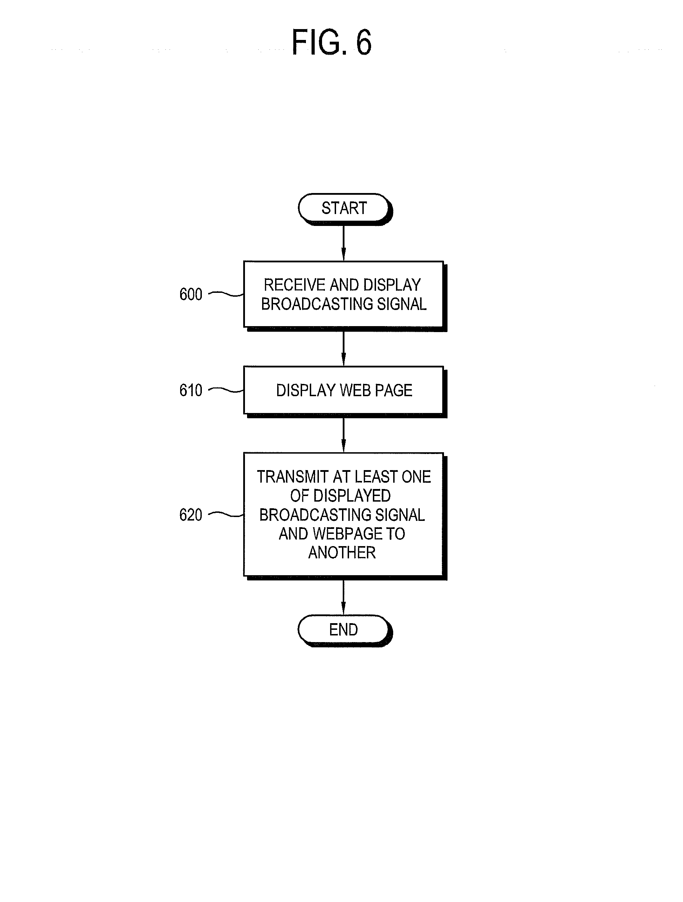

On the other hand, in the case that an external medium such as a PC, a mobile terminal, etc., not registered to the account server 120 tries to access the display apparatus 100 in this exemplary embodiment, if a user of the PC or the like knows the ID of the user of the display apparatus 100 in this exemplary embodiment, he/she can access the display apparatus 100 at operation 510(YES) by directly writing URL at operation 500. For example, a user may input http://tvuser.samsung.com/ID as a URL. If a user does not know the ID, he/she has to search the ID or the name of a user of the display apparatus 100 by accessing the account server 120 at operation 510, and clicks the corresponding ID or name to access the display apparatus 100 at operations 530 and 540. Here, direct access may be possible using the redirection function while searching the ID or the name. FIG. 6 is a flowchart showing operation of the display apparatus 100 according to an exemplary embodiment. If the display apparatus 100 is turned on, the broadcasting receiver 200 receives a broadcasting signal corresponding to a user's desired channel and supplies it to the video processor 210, and the video processor 210 processes the broadcasting signal to be displayed at operation 600. Then, if a user wants to output an web page, the controller 240 uses the web program to supply a web page to the video processor 210, and the video processor 210 processes the web page to be displayed, thereby displaying the processed web page at operation 610. While viewing the broadcast or the web page through the display apparatus 100, if there is external access from a user of an external medium, the display unit 220 displays an avatar or informs that there is external access from a user of the external medium, and the controller 240 sends the broadcast or the web page to the external medium at operation 620, thereby sharing the broadcast or the web page.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
a receiver which receives a broadcasting signal;
a video processor which processes the broadcasting signal received by the receiver to generate a video signal;
a storage unit which stores data of a web page;
a display unit which displays at least one of the video signal and the web page;
a communication unit which communicates with a communication terminal of a different user through a network; and
a controller which controls the display unit to display the at least one of the web page and the video signal, and controls the communication unit to transmit the at least one of the video signal and the web page displayed on the display unit to the communication terminal.

2. The display apparatus according to claim 1, wherein the display apparatus is assigned an Internet protocol (IP) address by an Internet service provider (ISP).

3. The display apparatus according to claim 1, wherein the controller controls the display unit to display an indication that there is a request to communicate with the display apparatus when the communication terminal attempts to communicate with the display apparatus.

4. The display apparatus according to claim 1, wherein the controller controls the display unit to selectively display the at least one of the video signal and the web page.

5. The display apparatus according to claim 1, wherein the controller controls the display unit to simultaneously display the video signal and the web page.

6. The display apparatus according to claim 1, wherein the controller controls the display unit to change display of the at least one of the video signal and the web page in response to input of a user of the display apparatus.

7. The display apparatus according to claim 1, wherein the storage further stores a web program and identification (ID) of the different user, data constituting the web page.

8. The display apparatus according to claim 1, wherein a user of the display apparatus accesses the communication terminal of the different user by clicking at least one of an ID and a name of the different user.

9. The display apparatus according to claim 1, wherein the controller controls the display unit to display a conversation box and controls the display to display information in the conversation box in response to at least one of input by the user of the display apparatus and information received from the different user by the communication unit.

10. A method of driving a display apparatus, the method comprising:
receiving a broadcasting signal, processing the received broadcasting signal to generate a video signal, and displaying the video signal on a display;
displaying a web page on the display; and
transmitting at least one of the video signal and the web page displayed on the display of the display apparatus to an external communication terminal.

11. The driving method according to claim 10, further comprising:
displaying an indication that there is a request to communicate with the display apparatus when the external communication terminal attempts to communicate with the display apparatus.

12. The driving method according to claim 10, wherein the video signal and the web page are selectively displayed.

13. The driving method according to claim 10, wherein the video signal and the web page are displayed simultaneously.

14. The driving method according to claim 10, further comprising:
changing environment of the web page by using external data in response to input of a user of the display apparatus.

15. The driving method according to claim 10, wherein the display apparatus stores a web program, the web page, and identification (ID) of a user of the external communication terminal.
